# EUROPÄISCHE PATENTANMELDUNG

(11) **EP 1 396 523 A1**
(43) Veröffentlichungstag der Anmeldung: **10.03.2004**
(21) Anmeldenummer: 03018726.4
(22) Anmeldetag: 26.08.2003
(51) Int. Cl.: C08K 5/5313, C08J 3/12

(54) **Kompaktierte Flammschutzmittelzusammensetzung**

(30) Priorität: 06.09.2002 DE 10241376
(71) Anmelder: Clariant GmbH, 65929 Frankfurt am Main (DE)
(72) Erfinder: Bauer, Harald, Dr., 50170 Kerpen (DE); Hörold, Sebastian, Dr., 86420 Diedorf (DE); Krause, Werner, Dr., 50354 Hürth (DE); Sicken, Martin, Dr., 51149 Köln (DE)
(74) Vertreter: Paczkowski, Marcus, Dr.

(57) **Zusammenfassung**

Die Erfindung betrifft eine kompaktierte Flammschutzmittelzusammensetzung enthaltend eine phosphororganische Flammschutzkomponente, hergestellt durch Kompaktieren einer phosphororganischen Flammschutzkomponente mit oder ohne Kompaktierhilfsmittel, ein Verfahren zur Herstellung solcher Flammschutzmittelzusammensetzungen und Polymer-Formmassen, die solche Flammschutzmittelzusammensetzungen enthalten.

## Beschreibung

Die vorliegende Erfindung betrifft eine kompaktierte Flammschutzmittelzusammensetzung mit reduzierter Neigung zur Staubbildung, sowie ein Verfahren zur Herstellung dieser kompaktierten Flammschutzmittelzusammensetzung und deren Verwendung.

Phosphororganische Verbindungen finden Anwendung als Flammschutzmittel für Kunststoffe wie z. B. Polyamide oder Polyester. In diesen Anwendungsgebieten ist die Verarbeitung der phosphororganischen Flammschutzkomponente auf Grund der Neigung zur Staubbildung häufig erschwert.

DE 196 50 563 A1 beschreibt Granulate enthaltend thermoplastische Polymere, ein Pfropfpolymerisat, ein thermoplastisches Copolymerisat und ein Flammschutzmittel, enthaltend Iminophosphorane.

EP 1 081 190 A1 beschreibt flammgeschützte thermoplastische Formmassen, enthaltend mindestens eine der Komponenten: hochmolekulares syndiotaktisches Polymer auf der Basis von vinylaromatischen Monomeren, Polyphenylenether, vinylaromatischen amorphen Polymeren, Flammschutzmittel

DE 41 39 625 A1 beschreibt ein Granulat bestehend aus Polyphenylenether, vinylaromatischen Polymeren, einem aromatischen Phosphit.

EP 0 899 296 A2 beschreibt Kunststoff-Formmassen enthaltend eine synergistische Flammschutzmittel-Kombination für thermoplastische Polymere, die aus einem Salz von 1-Hydroxy-dihydrophospholoxiden und einer weiteren Komponente aus der Gruppe Benzoguanamin, Tris(hydroxyethyl)isocyanurat, Allantoin, Glycoluril sowie Melamincyanurat, Melaminphosphat, Dimelaminphosphat und Melaminpyrophosphat und Ammoniumpolyphosphat.

US 5,021,488 A1 und US 5,102,931 A1 beschreiben thermosplastische flammgeschützte nichttropfende Polyamidzusammensetzungen, zu derer Herstellung Phosphinsäureester von Polyphenolen, Antitropfmittel, Polyfluoroethylenpolymer und/oder Aramid, Zinkborat (Hydrate) in kompaktierter oder pulverförmiger Form eingesetzt werden.

US 5,191,000 A1 beschreibt flammgeschützte nichttropfende Polyalkylenterephthalat-Zusammensetzungen, zu derer Herstellung Phosphorigsäureester und Antitropfmittel in Kompaktierter oder pulverförmiger Form eingesetzt werden.

Es bestand somit die Aufgabe, die Neigung zur Staubbildung von Flammschutzmittelzusammensetzungen zu verringern. Diese Aufgabe wird gelöst, indem pulverförmige Flammschutzmittelzusammensetzungen kompaktiert oder bevorzugt auch rollkompaktiert werden. Überraschend wurde gefunden, dass bei gleichzeitiger Reduzierung der Staubentwicklung eine gute Verteilung der phosphororganischen Flammschutzkomponente im Polymerformkörper gewährleistet ist.

Die Erfindung betrifft daher kompaktierte Flammschutzmittelzusammensetzung enthaltend eine phosphororganische Flammschutzkomponente, hergestellt durch Kompaktieren einer phosphororganischen Flammschutzkomponente mit oder ohne Kompaktierhilfsmittel.

Bevorzugt handelt es sich bei der phosphororganischen Flammschutzkomponente um ein Phosphinsäuresalz der Formel (I) und/oder ein Diphosphinsäuresalz der Formel (II) und/oder deren Polymere (Komponente A), 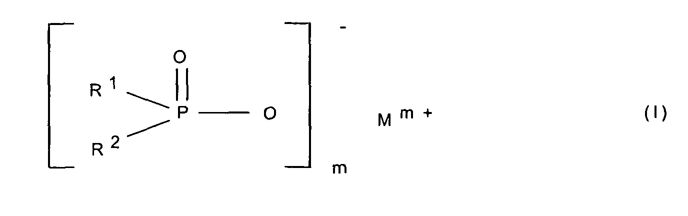 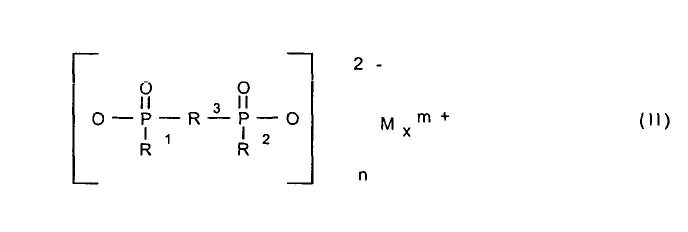 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder - Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4
bedeuten.

Bevorzugt bedeutet M Calcium, Aluminium oder Zink.

Unter protonierten Stickstoffbasen werden bevorzugt die protonierten Basen von Ammoniak, Melamin, Triethanolamin, insbesondere NH₄⁺, verstanden.

Bevorzugt sind R¹, R² gleich oder verschieden und bedeuten C₁-C₆-Alkyl, linear oder verzweigt und/oder Phenyl.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen.

Bevorzugt bedeutet R³ auch Phenylen oder Naphthylen.

Bevorzugt bedeutet R³ auch Methylphenylen, Ethylphenylen, tert.-Butylphenylen, Methylnaphthylen, Ethylnaphthylen oder tert.-Butylnaphthylen.

Bevorzugt bedeutet R³ auch Phenylmethylen, Phenylethylen, Phenylpropylen oder Phenylbutylen.

Bevorzugt enthält die kompaktierte Flammschutzmittelzusammensetzung und/oder die phosphororganische Flammschutzkomponente weiterhin Melaminphosphat, Dimelaminphosphat, Melaminpyrophosphat, Melaminpolyphosphate, Melampolyphosphate, Melempolyphosphate und/oder Melonpolyphosphate.

Bevorzugt enthält die kompaktierte Flammschutzmittelzusammensetzung und/oder die phosphororganische Flammschutzkomponente weiterhin Melaminkondensationsprodukte wie Melam, Melem und/oder Melon.

Geeignet sind Kondensationsprodukte des Melamins oder Umsetzungsprodukte des Melamins mit Phosphorsäure bzw. Umsetzungsprodukte von Kondensationsprodukten des Melamins mit Phosphorsäure sowie Gemische der genannten Produkte. Kondensationsprodukte des Melamins sind z.B. Melem, Melam oder Melon bzw. höher kondensierte Verbindungen dieses Typs sowie Gemische derselben und können z.B. durch ein Verfahren hergestellt werden, wie es in der WO-A-96/16948 beschrieben ist.

Unter den Umsetzungsprodukten mit Phosphorsäure versteht man Verbindungen, die durch Umsetzung von Melamin oder den kondensierten Melaminverbindungen wie Melam, Melem oder Melon etc. mit Phosphorsäure entstehen. Beispiele hierfür sind Melaminpolyphosphat, Melampolyphosphat und Melempolyphosphat bzw. gemischte Polysalze, wie sie z. B. in der PCT/WO 98/39306 beschrieben sind. Die genannten Verbindungen sind bereits aus der Literatur bekannt und können auch durch andere Verfahren als die direkte Umsetzung mit Phosphorsäure hergestellt werden. Melaminpolyphosphat kann zum Beispiel analog PCT/WO 98/45364 hergestellt werden durch die Umsetzung von Polyphosphorsäure und Melamin bzw. analog PCT/WO 98/08898 durch die Kondensation von Melaminphosphat bzw. Melaminpyrophosphat.

Bevorzugt enthält die kompaktierte Flammschutzmittelzusammensetzung und/oder die phosphororganische Flammschutzkomponente weiterhin oligomere Ester des Tris(hydroxyethyl)isocyanurats mit aromatischen Polycarbonsäuren, Benzoguanamin, Tris(hydroxyethyl)isocyanurat, Allantoin, Glucoluril, Melamin, Melamincyanurat, Dicyandiamid und/oder Guanidin.

Bevorzugt enthält die kompaktierte Flammschutzmittelzusammensetzung und/oder die phosphororganische Flammschutzkomponente stickstoffhaltige Phosphate der Formeln (NH₄)_{y} H_{3-y} PO₄ bzw. (NH₄ PO₃)_{z}, mit y gleich 1 bis 3 und z gleich 1 bis 10.000

Bevorzugt enthält die kompaktierte Flammschutzmittelzusammensetzung und/oder die phosphororganische Flammschutzkomponente als Komponente B eine synthetische anorganische Verbindung und/oder ein mineralisches Produkt.

Bevorzugt handelt es sich bei der Komponente B um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen.

Besonders bevorzugt handelt es sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, -phosphat, -borat oder -sulfide; bei den Aluminiumverbindungen um Aluminiumhydroxid oder -phosphat.

Bevorzugt enthält die kompaktierte Flammschutzmittelzusammensetzung und/oder die phosphororganische Flammschutzkomponente als weitere Komponente C Stickstoffverbindungen.

Bevorzugt handelt es sich bei den Stickstoffverbindungen um solche der Formeln (lll) bis (Vlll) oder Gemische davon 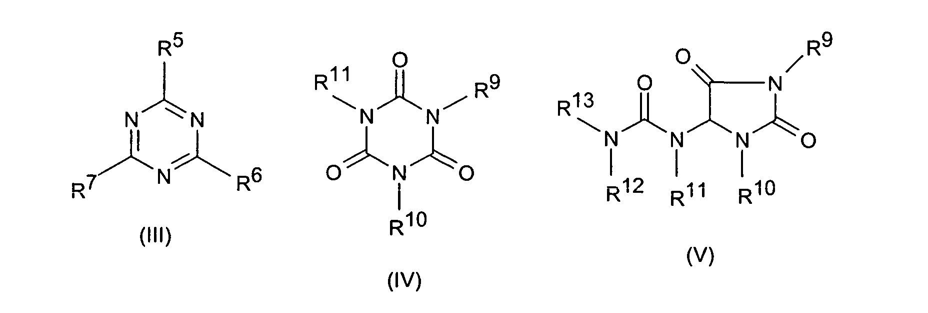 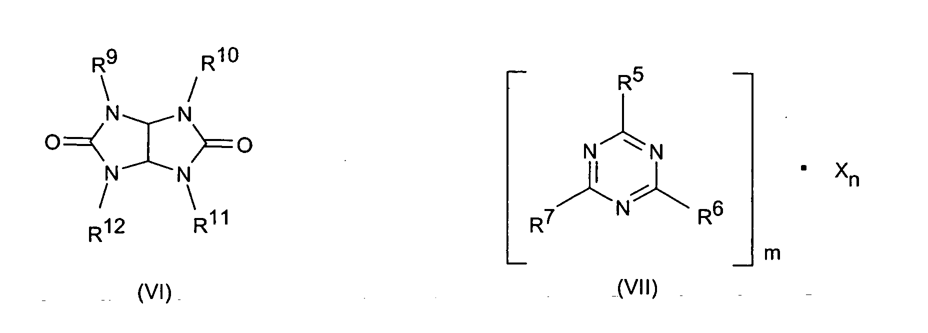 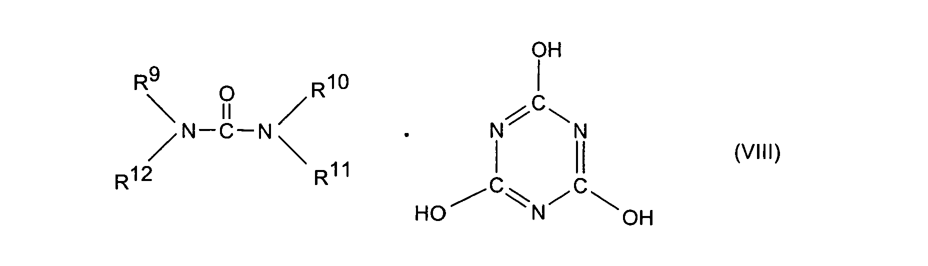 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder - Arylalkyl, -OR⁸ und -N(R⁸)R⁹, sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder - Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können,
bedeuten.

Bevorzugt enthält die kompaktierte Flammschutzmittelzusammensetzung und/oder die phosphororganische Flammschutzkomponente auch Carbodiimide.

Bevorzugt weisen die erfindungsgemäßen kompaktierten Flammschutzmittelzusammensetzungen eine mittlere Teilchengröße von 100 bis 2.000 µm, bevorzugt 200 bis 1000 µm auf.

Bevorzugt weisen die erfindungsgemäßen kompaktierten Flammschutzmittelzusammensetzungen eine mittlere Schüttdichte von 200 bis 1500 g/l, bevorzugt 300 bis 1.000 g/l, auf.

Bevorzugt beträgt das Mengen-Verhältnis von Kompaktierhilfsmittel zu phosphororganischer Flammschutzkomponente 1 zu 199 bis 1 zu 0,11, bevorzugt 1 bis 99 bis 1 zu 0,25 beträgt, besonders bevorzugt 1 zu 49 bis 1 zu 1.

Die mittlere Teilchengröße der eingesetzten phosphororganische Komponente beträgt 0,1 bis 1000 µm, bevorzugt 1 bis 100 µm.

Die bevorzugte Schüttdichte der eingesetzten phosphororganischen Komponente beträgt 80 bis 800 g/l, besonders bevorzugt 200 bis 700 g/l.

Erfindungsgemäß sind auch synergistische Kombinationen von den genannten Phosphinaten mit bestimmten stickstoffhaltigen Verbindungen, die in einer ganzen Reihe von Polymeren als Flammschutzmittel effektiver wirken, als die Phosphinate allein (DE 19614 424 A1 sowie DE 197 34 437 A1 und DE 197 37 727 A1 ).

Additive: Die Flammschutzwirkung der oberflächenmodifizierten Phosphinate kann durch Kombination mit weiteren Flammschutzmitteln, vorzugsweise stickstoffhaltigen Synergisten oder Phosphor/Stickstoff Flammschutzmitteln verbessert werden.

Die Erfindung betrifft auch ein Verfahren zur Herstellung von kompaktierten Flammschutzmittelzusammensetzungen, dadurch gekennzeichnet, dass man die phosphororganischen Flammschutzkomponente mit oder ohne Kompaktierhilfsmittel unter Drücken von 1 kN/cm² bis 60 kN/cm² verdichtet

Bevorzugt handelt es sich dabei um eine Rollkompaktierung.

Da bei der Rollkompaktierung die Auflagefläche der Rollen, und damit der wirksame Druck nicht besonders gut definiert ist, gibt man hier die Linienpresskraft an. Das ist die Kraft, die pro cm Länge der Kompaktierrollen wirkt.

Bei der Rollkompaktierung wird bevorzugt eine Linienpresskraft von 1 kN/cm bis 30 kN/cm eingesetzt.

Besonders bevorzugt wird bei der Rollkompaktierung eine Linienpresskraft von 2 kN/cm bis 20 kN/cm eingesetzt.

Bevorzugt handelt es sich bei dem Kompaktierhilfsmittel um Alkylalkoxylate mit 8 bis 22 C-Atomen und 1 bis 80 EO-Einheiten pro Mol Alkohol.

Bevorzugt handelt es sich bei dem Kompaktierhilfsmittel um Caprolactam und/oder Triphenylphosphat.

Bevorzugt handelt es sich bei dem Kompaktierhilfsmittel um Ethylenglykol, Propylenglykol und/oder Butylenglykol, deren Oligomere und/oder Polymere und/oder deren Ether.

Bevorzugt handelt es sich bei dem Kompaktierhilfsmittel um natürliche, chemisch modifizierte und/oder synthetische Wachse; bevorzugt um Carnaubawachse und Montanwachse.

Bevorzugt handelt es sich bei dem Kompaktierhilfsmittel um Kunstharze, bevorzugt Phenolharze.

Bevorzugte Kompaktierhilfsmittel sind Ester, Amide, Anhydride, Hydrate und Salze von gesättigten aliphatischen Mono-, Di-, Tri- und Polycarbonsäuren.

Bevorzugte Kompaktierhilfsmittel sind weiterhin C₁-C₂₀-(Alkyl-, Oxalkyl, Alkenyl-, Alkinyl-, Aralkyl-, Alkylaryl- oder Aryl-)Monocarbonsäureester, C₁-C₂₀-(Alkyl-, Oxalkyl, Alkenyl-, Alkinyl-, Aralkyl-, Alkylaryl- oder Aryl-) Dicarbonsäureester, C₁-C₂₀-(Alkyl-, Oxalkyl, Alkenyl-, Alkinyl-, Aralkyl-, Alkylaryl- oder Aryl-)Tri-carbonsäureester, C₁-C₂₀-(Alkyl-, Oxalkyl, Alkenyl-, Alkinyl-, Aralkyl-, Alkylaryl- oder Aryl-)Oligocarbonsäureester, C₁-C₂₀-(Alkyl-, Oxalkyl, Alkenyl-, Alkinyl-, Aralkyl-, Alkylaryl- oder Aryl-)Polycarbonsäureester.

Bevorzugte Kompaktierhilfsmittel sind weiterhin Dicarbonsäuremonoorganyl- oder -diorganylester; Tricarbonsäuremonoorganyl-, -diorganylester oder -triorganylester; Oligocarbonsäuremonoorganyl-, -diorganylester, -triorganylester oder - oligoorganylester; Polycarbonsäuremonoorganyl-, -diorganylester, -triorganylester, - oligoorganylester oder -polyorganylester oder Mischungen davon.

Bevorzugte Kompaktierhilfsmittel sind weiterhin Phthalsäureester, darunter Phthalsäuremonoorganylester oder Phthalsäurebisorganylester (Organyl = z.B. Alkyl, Oxalkyl, Alkenyl, Alkinyl, Aralkyl, Alkylaryl oder Aryl, bevorzugt Phthalsäuremonoalkylester, Phthalsäuredialkylester (Alkyl = lineares, verzweigtes, cyclisches, substituiertes cyclisches, heterocyclisches C₁-C₂₀), z.B. Dimethylphthalat, Diethylphthalat, Dipropylphthalat, Diisopropylphthalat, Dibutylphthalat, epoxidiertes Di(2-ethylhexyl)phthalat, Diisooctylphthalat, Dioctylphthalat, Diisononylphthalat, n-Octylphthalat, n-Decylphthalat, Diisodecylphthalat, Butylbenzylphthalat, Butylcyclohexylphthalat, Dicaprylphthalat, Di(3,5,5-trimethylhexyl)phthalat, Di(1-allyl-2,2,6,6-tetramethylpiperidin-4-yl) phthalat.

Bevorzugte Kompaktierhilfsmittel sind weiterhin Isophthalsäureester, darunter Isophthalsäuremonoorganylester oder Isophthalsäurebisorganylester (Organyl = z.B. Alkyl, Oxalkyl, Alkenyl, Alkinyl, Aralkyl, Alkylaryl oder Aryl, bevorzugt Isophthalsäuremonoalkylester, Isophthalsäuredialkylester (Alkyl = lineares, verzweigtes, cyclisches, substituiertes cyclisches, heterocyclisches C₁-C₂₀), z.B. Di(2-ethylhexyl)isophthalat.

Bevorzugte Kompaktierhilfsmittel sind weiterhin Terephthalsäureester, darunter Terephthalsäuremonoorganylester oder Terephthalsäurebisorganylester (Organyl = z.B. Alkyl, Oxalkyl, Alkenyl, Alkinyl, Aralkyl, Alkylaryl oder Aryl, bevorzugt Terephthalsäuremonoalkylester, Terephthalsäuredialkylester (Alkyl = lineares, verzweigtes, cyclisches, substituiertes cyclisches, heterocyclisches C₁-C₂₀).

Bevorzugte Kompaktierhilfsmittel sind weiterhin Oxalsäureester, Malonsäureester (z.B. Di(2,2,6,6-tetramethylpiperidin-4-yl) diethylmalonat, Di(1,2,2,6,6-pentamethylpiperidin-4-yl) dibutylmalonat, Di(1,2,2,6,6-pentamethylpiperidin-4-yl) butyl(3,5-di-tert-butyl-4-hydroxybenzyl)malonat), Bernsteinsäureester (z.B. Di(2,2,6,6-tetramethylpiperidin-4-yl) succinat), Glutarsäureester (z.B. Di(2,2,6,6-tetramethylpiperidin-4-yl) glutarat).

Bevorzugte Kompaktierhilfsmittel sind weiterhin Adipinsäureester, darunter Adipinsäuremonoorganylester oder Adipinsäurebisorganylester (Organyl = z.B. Alkyl, Oxalkyl, Alkenyl, Alkinyl, Aralkyl, Alkylaryl oder Aryl, bevorzugt Adipinsäuremonoalkylester, Adipinsäuredialkylester (Alkyl = lineares, verzweigtes, cyclisches, substituiertes cyclisches, heterocyclisches C₁-C₂₀), z.B. Dimethyladipat, Diethyladipat, Di-n-propyladipat, Di-iso-propyladipat, Di-n-butyladipat, Di-iso-butyladipat, Di-tert-butyladipat, Di(n-Octyl)adipat, Di(2-ethylhexyl)adipat, Diisodecyladipat, n-Octyladipat, 2-ethylhexyladipat, n-Decyladipat, isodecyladipat, Di(2,2,6,6-tetramethylpiperidin-4-yl) adipat.

Bevorzugte Kompaktierhilfsmittel sind weiterhin Pimelinsäureester, Suberinsäure, Azelainsäureester (z.B. Dialkylazelat, besonders Di(2-ethylhexyl)azelat, Ester der 1,13-Tridecandicarbonsäure (Brassylic acid).

Bevorzugte Kompaktierhilfsmittel sind weiterhin Sebacinsäureester, darunter Sebacinsäuremonoorganylester oder Sebacinsäurebisorganylester (Organyl = z.B. Alkyl, Oxalkyl, Alkenyl, Alkinyl, Aralkyl, Alkylaryl oder Aryl, bevorzugt Sebacinsäuremonoalkylester, Sebacinsäuredialkylester (Alkyl = lineares, verzweigtes, cyclisches, substituiertes cyclisches, heterocyclisches C₁-C₂₀), z.B. Dialkylsebacat, besonders Di(2-ethylhexyl)sebacat, Di(2,2,6,6-tetramethylpiperidin-4-yl) sebacat, Di(1,2,2,6,6-pentamethylpiperidin-4-yl) sebacat, Di(1,2,3,6-tetramethyl-2,6-diethyl-piperidin-4-yl) sebacat, Di(1-octyloxy-2,2,6,6-tetramethylpiperidin-4-yl) sebacat, Di(1-cyclohexyloxy-2,2,6,6-tetramethylpiperidin-4-yl) sebacat.

Bevorzugte Kompaktierhilfsmittel sind weiterhin Tetrahydrophtalsäureester, darunter Tetrahydrophtalsäuremonoorganylester oder Tetrahydrophtalsäurebisorganylester (Organyl = z.B. Alkyl, Oxalkyl, Alkenyl, Alkinyl, Aralkyl, Alkylaryl oder Aryl, bevorzugt Tetrahydrophtalsäuremonoalkylester, Tetrahydrophtalsäuredialkylester (Alkyl = lineares, verzweigtes, cyclisches, substituiertes cyclisches, heterocyclisches C₁-C₂₀), z.B. Di(2-ethylhexyl)tetrahydrophthalat.

Bevorzugte Kompaktierhilfsmittel sind weiterhin Tetrahydroisophthalsäureester, darunter Tetrahydroisophthalsäuremonoorganylester oder Tetrahydroisophthalsäurebisorganylester (Organyl = z.B. Alkyl, Oxalkyl, Alkenyl, Alkinyl, Aralkyl, Alkylaryl oder Aryl, bevorzugt Tetrahydroisophthalsäuremonoalkylester, Tetrahydroisophthalsäuredialkylester (Alkyl = lineares, verzweigtes, cyclisches, substituiertes cyclisches, heterocyclisches C₁-C₂₀).

Bevorzugte Kompaktierhilfsmittel sind weiterhin Tetrahydroterephthalsäureester, darunter Tetrahydroterephthalsäuremonoorganylester oder Tetrahydroterephthalsäurebisorganylester (Organyl = z.B. Alkyl, Oxalkyl, Alkenyl, Alkinyl, Aralkyl, Alkylaryl oder Aryl, bevorzugt Tetrahydroterephthalsäuremonoalkylester, Tetrahydroterephthalsäuredialkylester (Alkyl = lineares, verzweigtes, cyclisches, substituiertes cyclisches, heterocyclisches C₁-C₂₀).

Bevorzugte Kompaktierhilfsmittel sind weiterhin Hexahydrophtalsäureester, darunter Hexahydrophtalsäuremonoorganylester oder Hexahydrophtalsäurebisorganylester (Organyl = z.B. Alkyl, Oxalkyl, Alkenyl, Alkinyl, Aralkyl, Alkylaryl oder Aryl, bevorzugt Hexahydrophtalsäuremonoalkylester, Hexahydrophtalsäuredialkylester (Alkyl = lineares, verzweigtes, cyclisches, substituiertes cyclisches, heterocyclisches C₁-C₂₀), z.B. Di(2-ethylhexyl)hexahydrophthalat.

Bevorzugte Kompaktierhilfsmittel sind weiterhin Hexahydroisophthalsäureester, darunter Hexahydroisophthalsäuremonoorganylester oder Hexahydroisophthalsäurebisorganylester (Organyl = z.B. Alkyl, Oxalkyl, Alkenyl, Alkinyl, Aralkyl, Alkylaryl oder Aryl, bevorzugt Hexahydroisophthalsäuremonoalkylester, Hexahydroisophthalsäuredialkylester (Alkyl = lineares, verzweigtes, cyclisches, substituiertes cyclisches, heterocyclisches C₁-C₂₀).

Bevorzugte Kompaktierhilfsmittel sind weiterhin Hexahydroterephthalsäureester, darunter Hexahydroterephthalsäuremonoorganylester oder Hexahydroterephthalsäurebisorganylester (Organyl = z.B. Alkyl, Oxalkyl, Alkenyl, Alkinyl, Aralkyl, Alkylaryl oder Aryl, bevorzugt Hexahydroterephthalsäuremonoalkylester, Hexahydroterephthalsäuredialkylester (Alkyl = lineares, verzweigtes, cyclisches, substituiertes cyclisches, heterocyclisches C₁-C₂₀).

Bevorzugte Kompaktierhilfsmittel sind weiterhin Maleinsäureester, darunter Maleinsäuremonoorganylester oder Maleinsäurebisorganylester (Organyl = z.B. Alkyl, Oxalkyl, Alkenyl, Alkinyl, Aralkyl, Alkylaryl oder Aryl, bevorzugt Maleinsäuremonoalkylester, Maleinsäuredialkylester (Alkyl = lineares, verzweigtes, cyclisches, substituiertes cyclisches, heterocyclisches C₁-C₂₀), z.B. Di(1-benzyl-2,2,6,6-tetramethylpiperidin-4-yl) maleat.

Bevorzugte Kompaktierhilfsmittel sind weiterhin Ester von Hydroxycarbonsäuren, Hydroxydicarbonsäuren, Hydroxytricarbonsäuren, Hydroxyoligocarbonsäuren und/oder Hydroxypolycarbonsäuren, z.B. Tartronsäure, Äpfelsäure, Weinsäure, Citronensäure etc.

Bevorzugte Kompaktierhilfsmittel sind weiterhin Citronensäureester, darunter Citronensäuremonoorganylester oder Citronensäurebisorganylester (Organyl = z.B. Alkyl, Oxalkyl, Alkenyl, Alkinyl, Aralkyl, Alkylaryl oder Aryl, bevorzugt Citronensäuremonoalkylester, Citronensäuredialkylester (Alkyl = lineares, verzweigtes, cyclisches, substituiertes cyclisches, heterocyclisches C₁-C₂₀).

Bevorzugte Kompaktierhilfsmittel sind weiterhin Butylepoxystearat, Hexylepoxystearat, epoxidiertes Sojaöl, epoxidiertes Octyltallat, epoxidiertes Octyloleat, Tetraethyleneglycol/di(2-ethylhexoat), und Triethylenglycol/di(2-ethylhexoat).

Bevorzugte Kompaktierhilfsmittel sind weiterhin Ester von ein-, zwei-, drei-, vier-, fünfwertigen Alkoholen und höheren Polyolen.

Bevorzugte Kompaktierhilfsmittel sind Mono-, Di-, Tri- oder Tetraorganylester von Pentaerythrit oder Mischungen davon, z.B. Pentaerythrittetrabenzoat.

Bevorzugte Kompaktierhilfsmittel Sulfonamidbasierende Verbindungen, besonders bevorzugt Aromatische Sulfonamide z.B. N-Ethyltoluolsulfonamid,
N-Cyclohexyltoluolsulfonamid, N-Butylbenzolsulfonamid, N-Methylbenzolsulfonamid, N-Butyl-benzolsulfonamid, p-Toluolsulfonamid, N-Ethyl-p-toluolsulfonamid und N-Cyclohexyl-p-toluol sulfonamid.

Bevorzugte Kompaktierhilfsmittel sind Glycerin, Hexylglycol, modifiziertes Urethane Prepolymer das im Gewichtsdruchschnitt ein Molekulargewicht von 400 bis 2000, bevorzugt 600 bis 1000 besitzt.

Bevorzugte Kompaktierhilfsmittel sind p-Hydroxybenzoesäureester z.B. Hexyloxyethoxyethyl p-hydroxybenzoat, Hexyloxypropoxypropyl-p-hydroxybenzoat, Hexyloxybutoxybutyl p-hydroxybenzoat, Octyloxyethoxyethyl p-hydroxybenzoat, Octyloxypropoxypropyl p-hydroxybenzoat, Octyloxybutoxybutyl p-hydroxybenzoat, 2'-Ethylhexyloxyethoxyethyl p-hydroxybenzoat, 2'-Ethylhexyloxypropoxypropyl p-hydroxybenzoat, 2'-Ethylhexyloxybutoxybutyl p-hydroxybenzoat, Decyloxyethoxyethyl p-hydroxybenzoat, Decyloxypropoxypropyl p-hydroxybenzoat, Decyloxybutoxybutyl p-hydroxybenzoat.

Bevorzugte Kompaktierhilfsmittel sind p-Hydroxybenzoesäurealkylester z.B. Octyl p-hydroxybenzoat, 2-ethylhexyl p-hydroxybenzoat, heptyl p-hydroxybenzoat, 2-ethyldecyl p-hydroxybenzoat, 2-octyloctyl p-hydroxybenzoat and 2-decyldodecyl p-hydroxybenzoat.

Bevorzugte Kompaktierhilfsmittel sind Phenole such as beta-Naphthol, Dibenzylphenol and Octylcresol.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogen-phosphat, Bis(2-ethylhexyl)-p-tolylphosphat, Tritolylphosphat, Bis(2-ethylhexyl)-phenylphosphat, Di(nonyl)phenylphosphat, Phenylmethylhydrogenphosphat, Di(dodecyl)-p-tolylphosphat, p-Tolylbis(2,5,5-trimethylhexyl)phosphat oder 2-Ethylhexyldiphenyl-phosphat. Ganz besonders geeignet ist Triphenylphosphat und Resorcinol-bis-(diphenylphosphat) (RDP) und dessen kernsubstituierten Derivate.

Bevorzugte Kompaktierhilfsmittel sind weiterhin Tri(butoxyethyl)phosphat, Trioctylphosphat, Trikresylphosphat, 2-Ethylhexyldiphenylphosphat, Cresyldiphenylphosphat.

Bevorzugte Kompaktierhilfsmittel sind organische Salze von mehrwertigen Metallen, besonders bevorzugt organische Salze von Elementen der zweiten, dritten und vierten Hauptgruppe und der zweiten Nebengruppe besonders der Elemente Magnesium, Calcium, Strontium, Barium, Zink, Cadmium, Aluminium, Zinn, Blei. Besonders bevorzugt sind Carbonsäuren mit mindestens 12 Kohlenstoffatome Dodecansäure (Laurinsäure), Cocossäure, Tetradecansäure (Myristinsäure), Hexadecansäure (Palmitinsäure, Cetylsäure), Octadecansäure (Stearinsäure), cis-9-Octadecensäure, (Ölsäure, Elainsäure), trans-9-Octadecensäure, (Elaidinsäure), Eicosansäure (Arachidinsäure), Docosansäure (Behensäure).

Die Erfindung betrifft auch eine flammgeschützte Polymerformmasse, die die erfindungsgemäße kompaktierte Flammschutzmittelzusammensetzung enthält.

Bevorzugt enthält die flammgeschützte Polymerformmasse
1 bis 50 Gew.-% kompaktierte Flammschutzmittelzusammensetzung,
1 bis 99 Gew.-% thermoplastisches Polymer oder Mischungen derselben
0 bis 60 Gew.-% Additive
0 bis 60 Gew.-% Füllstoff.

Besonders bevorzugt enthält die flammgeschützte Polymerformmasse
5 bis 30 Gew.-% kompaktierte Flammschutzmittelzusammensetzung,
5 bis 90 Gew.-% thermoplastisches Polymer oder Mischungen derselben
5 bis 40 Gew.-% Additive
5 bis 40 Gew.-% Füllstoff.

Bevorzugt enthält die flammgeschützte Polymerformmasse weiterhin Komponenten B und/oder C, wie zuvor beschrieben.

Bevorzugt handelt es sich bei den thermoplastischen Polymeren um Polystyrol-Hl (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol).

Besonders bevorzugt handelt es sich bei den thermoplastischen Polymeren um Polyamid, Polyester oder ABS.

Die Erfindung betrifft schließlich auch Polymer-Formkörper, -Filme, -Fäden und - Fasern, enthaltend die erfindungsgemäße kompaktierte Flammschutzmittelzusammensetzung.

Bei dem Polymer der Polymer-Formkörper, -Filme, -Fäden und -Fasern handelt es sich um ein thermoplastisches oder duroplastisches Polymer.

Bevorzugt handelt es sich den thermoplastischen Polymeren um Polystyrol-Hl (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS.

Bevorzugte thermoplastische Polymere sind Polyethylen (PE), Polypropylen (PP), Polystyrol (PS), Polyvinylchlorid (PVC), Polyacrylnitril (PAN) und Polyacrylate.

Bevorzugt handelt es sich bei den duroplastischen Polymeren um Formaldehyd-, Epoxid-, Melamin- Phenolharz-Polymere und/oder Polyurethane.

Bevorzugt enthalten die Polymer-Formkörper, -Filme, -Fäden und -Fasern
1 bis 50 Gew.-% kompaktierte Flammschutzmittelzusammensetzung,
1 bis 99 Gew.-% Polymer oder Mischungen derselben
0 bis 60 Gew.-% Additive
0 bis 60 Gew.-% Füllstoff.

Besonders bevorzugt enthalten die Polymer-Formkörper, -Filme, -Fäden und - Fasern
5 bis 30 Gew.-% kompaktierte Flammschutzmittelzusammensetzung,
5 bis 90 Gew.-% Polymer oder Mischungen derselben
5 bis 40 Gew.-% Additive
5 bis 40 Gew.-% Füllstoff.

Bevorzugte thermoplastische Polymere sind Polyethylen (PE), Polypropylen (PP), Polystyrol (PS), Polyvinylchlorid (PVC), Polyacrylnitril (PAN), Polyamid (PA), Polyester (PES), Polycarbonat und Polyacrylate.

Bevorzugte thermoplastische Polymere sind Formaldehyd-, Epoxid-, Melamin-Phenolharz-Polymere und Polyurethane

Flammschutz-Beschichtung enthaltend mindestens
1 bis 50 % kompaktierte Flammschutzmittelzusammensetzung
0 bis 60 % Ammoniumpolyphosphat

### Beschreibung der Kompaktierhilfsmittel

Wachse sind natürlich oder künstlich gewonnene Stoffe, die bei 20°C fest und knetbar und über 40°C ohne Zersetzung schmelzend und niedrigviskos sind. Wachse gehen in der Regel zwischen 50 und 90°C, in Ausnahmefällen auch bis zu etwa 200°C, in den schmelzflüssigen, niedrigviskosen Zustand über. Man unterscheidet natürliche Wachse wie Carnaubawachs, chemisch modifizierte Wachse wie Montanesterwachse und synthetische Wachse wie Polyethylenwachse.

Montanwachse für die Kunststoffverarbeitung die Gleitmittel und interne Trennmittel für die Verarbeitung von Polyvinylchlorid, Polyolefinen, Polyamind, Polystyrol, linearen Polyestern, thermoplastischem Polyurethan, härtbaren Formmassen und anderen Kunststoffen sind. Sie sind Folgeprodukte der Raffination von Rohmontanwachs, das durch Extraktion von Braunkohle gewonnen wird. Sie stellen langkettige Carbonsäuren der Kettenlängen C2₈-C₃₂, deren Voll- und Teilester mit Ethylenglykol Glycerin, Butylenglykol und Erdalkalisalze von teilhydrolysierten Estern dar, z.B. ®Licowax E, ®Licowax WE 4 und ®Licowax OP.

Polyethylenwachse sind für den Polymerbereich (PVC, Gummi, Polyolefine) geeignet. z.B. ® Licowax PE 520, ® Licowax PE 810, ® Licowax PE 820, ® Licowax PE 830, ® Licowax PE 840, ® Licomont CaV, ® Licolub WE4, Ceridust 5551.

Unter den Alkylalkoxylaten werden bevorzugt ethoxylierte Alkohole, bevorzugt primäre Alkohole, mit bevorzugt 8 bis 22 C-Atomen und bevorzugt 1 bis 80 EO-Einheiten pro Mol Alkohol, eingesetzt, wobei der Alkoholrest linear oder bevorzugt in 2-Stellung methylverzweigt ist oder lineare und methylverzweigte Reste im Gemisch enthält, so wie dies üblicherweise in Oxoalkoholresten der Fall ist. Zu den bevorzugten ethoxylierten Alkoholen gehören beispielsweise C11-Alkohole mit 3, 5, 7, 8 und 11 EO-Einheiten, (C₁₂-C₁₅)-Alkohole mit 3, 6, 7, 8, 10 und 13 EO-Einheiten, (C₁₄-C₁₅)-Alkohole mit 4, 7 und 8 EO-Einheiten, (C₁₆-C₁₈)-Alkohole mit 8, 11, 15, 20, 25, 50 und 80 EO-Einheiten und Mischungen derselben, wie z.B. die ® Genapol-Typen T80, T110, T150, T200, T250, T500, T800 der Fa. Clariant GmbH. Die angegebenen Ethoxylierungsgrade stellen statistische Mittelwerte dar, die für ein spezielles Produkt eine ganze oder eine gebrochene Zahl sein können. Zusätzlich zu diesen können auch Fettalkohol-EO/PO-Addukte eingesetzt werden.

Bevorzugt sind weiterhin Polyethylenglycole H(OCH₂CH₂O)ₙOH mit Molekularmassen von 500 bis 40000 Besonders bevorzugt sind die Typen @PEG 600, 800, 1000, 1500, 2000, 3000, 4000, 6000, 8000, 10000, 12000, 20000, 35000.

Bevorzugt sind weiterhin Polyethylenglycolmonoalkylether, Polyethylenglycolmonoallylether, Polyethylenglycolmonovinylether.

Bevorzugt sind weiterhin Caprolactam und Triphenylphosphat.

Bevorzugt sind weiterhin Kunstharze, darunter werden nach DIN 55958 synthetische Harze verstanden, die durch Polymerisations-, Polyadditions- oder Polykondensationsreaktion hergestellt werden. Duroplaste ist eine Sammelbezeichnung für alle aus härtbaren Harzen hergestellten Kunststoffe. Zu den Duroplasten gehören Epoxidharze, Polyurethane, Phenolharze, Melaminharze sowie ungesättigte Polyesterharze. Bevorzugtes Phenolharz ist z.B. der Typ 28391 der Fa. Durez.

### Verfahren

Das bevorzugte Verfahren zur Herstellung der erfindungsgemäßen kompaktierten Flammschutzmittelzusammensetzung ist die Kompaktierung: Dabei werden die Feststoffpartikel durch äußere Druckeinwirkung gegeneinander verhackt. Der sich bildende Feststoffkörper wird mechanisch durch Brechen in Körner zerkleinert, die klassiert werden. Das klassierte Produkt (Gutkorn) stellt die erfindungsgemäße Kompaktierte Flammschutzmittelzusammensetzung (GFS) dar.

Die Pressgranulierung erfolgt durch Rollkompaktierung, Brikettierung etc.

Bei der Rollkompaktierung wird das pulverförmige Ausgangsmaterial zwischen zwei Rollen dosiert, die das Material einziehen und kompaktieren. Das primäre Kompaktat ist eine Platte, beziehungsweise, wenn die Walzen strukturiert sind, z.B. zigarrenförmige Schülpen. Die Schülpen werden mechanisch zerkleinert. Bei der Rollkompaktierung ist eine Linienpresskraft 1 kN/cm bis 30 kN/cm bevorzugt und eine Linienpresskraft von 2 kN/cm bis 20 kN/cm besonders bevorzugt.

Bevorzugte Apparate für die Rollkompaktierung sind Kompaktoren der Firmen Hosokawa-Bepex GmbH (Pharmapaktor R), Alexanderwerk (WP 120 x 40 V, WP 170 x 120 V, WP 200 x 75 VN, WP 300 x 100 V) und Walzenpressen der Firma Köppern.

Durch Mahlung und nachfolgende Klassierung wird die Korngröße optimal eingestellt. Zur Mahlung eignen sich beispielsweise Hammermühlen, Prallmühlen Schwingmühlen, Kugelmühlen, Walzen- und Pendelrollmühlen der Fa. Neuman & Esser sowie Luftstrahlmühlen wie Typen der Fa. Hosokawa-Alpine. Als Klassierung dienen Sichtung und/oder Siebung. Zur Siebung können z.B. Allgeier-, Rhewum- Locker-Siebe dienen.

Wahlweise können Mahlhilfsstoffe zugesetzt werden.

Ein solches Pressgranulat hat im Gegensatz zu einem Schmelzagglomerat den Vorteil, dass weniger oder kein Kompaktierhilfsmittel benötigt wird. Überraschenderweise wurde gefunden, dass die erfindungsgemäßen kompaktierten Flammschutzmittelzusammensetzungen ein sehr gutes Verteilungsverhalten im Kunststoff zeigen.

Eine gute Partikelverteilung ist die Vorraussetzung für eine gute und ästhetischer Oberflächenbeschaffenheit und -güte und gute mechanische Festigkeitseigenschaften.

Die erfindungsgemäße Kompaktierte Flammschutzmittelzusammensetzung kann in einer Ausführungsform hergestellt werden, indem das Kompaktierhilfsmittel in fester oder flüssiger Form in einem geeigneten Mischer zu der bewegten phosphororganischen Komponente gegeben und 0,01 bis 1 Stunden bei 50 bis 300°C gemischt wird.

Geeignete Mischer können sein: Pflugscharmischertypen der Fa. Lödige, Ringspaltmischertypen der Fa. Lödige, (z.B. Typ CB30), Flexomix-Mischertypen der Fa. Schugi, Ringspaltmischer Typ HEC der Fa. Niro, Ringschichtmischer (z.B. Typ K-TTE4) der Fa. Drais/Mannheim, Eirich-Mischer (z.B. Typ R02), Telschig-Mischer (Typ WPA6), Hauf-Mischer (die beiden letzten arbeiten nach dem Freifallprinzip) Zig-Zag-Mischer der Fa. Niro und Mischer der Fa. Nauta, in denen das Mischgut nach dem Archimedes-Prinzip durch eine Schnecke umwälzt wird. Weiterhin geeignet sind Taumel- und Hobartmischer.

Die zunächst entstehende Produktmischung kann in einem geeigneten Trockner getrocknet beziehungsweise getempert werden. Erfindungsgemäße Trockner können sein: Fließbetttrockner der Fa. Hosokawa Schugi (Typen: Schugi Fluid-Bed, Vometec Fließbett-Trockner), Wirbelbetttrockner der Fa. Waldner bzw. der Fa. Glatt, Turbo-Flugschichttrockner der Fa. Waldner, Spin-flash-Trockner der Fa. Anhydro sowie Trommeltrockner.

Bevorzugte Betriebsbedingungen im Fließbetttrockner sind: Lufteintrittstemperatur 120 bis 280°C, Produkttemperatur 20 bis 200°C.

Die verbleibende Feuchte der erfindungsgemäßen kompaktierten Flammschutzmittelzusammensetzung beträgt 0,01 bis 10 %, bevorzugt 0,05 bis 1 %.

Die erfindungsgemäße kompaktierte Flammschutzmittelzusammensetzung wird bevorzugt in Compounds angewendet, die weiter zur Erzeugung von Polymer-Formkörpern verwendet werden.

Die flammhemmenden Komponenten können in thermoplastische Polymere eingearbeitet werden, indem z.B. alle Bestandteile als Pulver und/oder Granulat in einem Mischer vorgemischt und anschließend in einem Compoundieraggregat (z.B. einem Doppelschneckenextruder) in der Polymerschmelze homogenisiert werden. Die Schmelze wird üblicherweise als Strang abgezogen, gekühlt und granuliert. Die Komponenten können auch separat über eine Dosieranlage direkt in das Compoundieraggregat eingebracht werden.

Es ist ebenso möglich, die flammhemmenden Zusätze einem fertigen Polymergranulat bzw. -pulver beizumischen und die Mischung direkt auf einer Spritzgussmaschine zu Formteilen zu verarbeiten.

Bevorzugte Füllstoffe sind Glas (bevorzugt in Kugel oder in Faserform), Oxide und/oder Hydroxide der Elemente der zweiten und dritten Hauptgruppe des Periodensystems der Elemente (bevorzugt Aluminium und Magnesium), Schichtsilicate und Tonminerale z.B. Bentonite, Montmorillonite, Hectorite, Saponite, gefällte/pyrogene/kristalline/amorphe Kieselsäuren, Kreide.

Bevorzugte Additive sind Synergisten, Antioxidantien, Lichtschutzmittel, Gleitmittel, Farbmittel, Nukleierungsmittel oder Antistatika. Beispiele für die verwendbaren Zusätze sind in EP-A-584 567 angegeben.

### Experimentelles

### Bestimmung der Kornverteilung mit dem Microtrac Granulometer

Die Teilchengröße in wässriger Dispersion wird mit Hilfe eines Granulometer Microtrac ASVR/FRA der Fa. Leeds u. Northrup bestimmt. Gemessen wird die Reflexion bzw. Beugung eines Laserstrahls beim Durchdringen der Dispersion. Hierfür werden 400ml Ethanol durch die Lasermesszelle gepumpt. Automatisch wird die Festkörperprobe (z.B. 70mg) zudosiert und nach 10 min die Teilchengrößenverteilung bestimmt. Die Auswertungseinheit des Gerätes berechnet den d₅₀- und den d₉₀-Wert.

### Rollkompaktieren

In einem Rollkompaktor (Firma Hosokawa-Bepex, Typ: L200/50P) wird das Ausgangsmaterial mit Hilfe einer Stopfschnecke zwischen die Kompaktorwalzen befördert (Einstellung: Stufe 2 bis 3). Dies geschieht so schnell, dass bei einer Auflagelänge von 50mm die gewünschte Linienpresskraft entsteht. Die Walzenumdrehung wird auf Stufe 2 gestellt und der Walzenspalt beträgt 0,1 mm. Die entstehenden Schülpen (Länge: ca. 50mm, Dicke: ca. 2-5 mm, Breite ca. 10-15 mm) werden in einer Hammermühle (Fa. Alpine, Typ UPZ) mit einem Sieblochdurchmesser von 5 mm bei einer Umdrehungszahl von 600 bis 1400 Upm gebrochen.

### Herstellung von Kornfraktionen

Von dem gebrochenen rollkompaktierten Produkt wird auf einem Elektroschwingsieb (Fa. Siemens) mit eingebautem 1 mm-Sieb zunächst das Grobkorn abgetrennt. Von dem Siebdurchgang wird mit einem zweiten Sieb (400 µm) das Unterkorn abgetrennt. Das auf dem Sieb zurückbleibende Material ist das Gutkorn. Das Grobkorn wird nochmals gebrochen und gesiebt.

### Bestimmung der Staubneigung

In eine Waschflasche werden 10 g des zu untersuchenden Materials eingewogen. Bei einem Gasstrom von 1 l/min wird durch das Material 20 min Stickstoff durchgeleitet. Die danach zurückbleibende Pulvermenge wird gewogen. Der ausgetragene Anteil wird durch die Einwaage dividiert und auf 100 % bezogen.

### Herstellung, Verarbeitung und Prüfung von flammhemmenden Compounds und Kunststoff-Formkörpern

Die Flammschutzkomponenten werden mit dem Polymergranulat und evtl. Additiven vermischt und auf einem Doppelschnecken-Extruder (Typ Leistritz LSM 30/34) bei Temperaturen von 230 bis 260°C (PBT-GV) bzw. von 260 bis 280°C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270°C (PBT-GV) bzw. von 260 bis 290°C (PA 66-GV) zu Prüfkörpern verarbeitet und anhand des UL 94-Tests (Underwriter Laboratories) auf Flammwidrigkeit geprüft und klassifiziert.

### Beispiel 1

Es werden 10 kg Diethylphosphinsäure-Aluminiumsalz (mittlerer Teilchendurchmesser d₅₀ = 16 µm) entsprechend den allgemeinen Vorschriften "Rollkompaktieren" bei einer Linienpresskraft von 4 kN/cm kompaktiert und nach der allgemeinen Vorschrift "Herstellung von Kornfraktionen" zu einer Kornfraktion von 400 bis 1000 µm verarbeitet.

### Beispiel 2

Es werden 10 kg Diethylphosphinsäure-Aluminiumsalz entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1000 µm verarbeitet.

### Beispiel 3

Es werden 10 kg Diethylphosphinsäure-Aluminiumsalz entsprechend den allgemeinen Vorschriften "Rollkompaktieren" bei einer Linienpresskraft von 30 kN/cm kompaktiert und nach der allgemeinen Vorschrift "Herstellung von Kornfraktionen" zu einer Kornfraktion von 400 bis 1000 µm verarbeitet.

### Beispiel 4

Es werden 10 kg Diethylphosphinsäure-Aluminiurnsalz entsprechend den allgemeinen Vorschriften "Rollkompaktieren" bei einer Linienpresskraft von 38 kN/cm kompaktiert und nach der allgemeinen Vorschrift "Herstellung von Kornfraktionen" zu einer Kornfraktion von 400 bis 1000 µm verarbeitet.

### Beispiel 5

In einem Taumelmischer werden 5,0 kg Melaminpolyphosphat Melapur® MP (Melaminphosphat), Fa. DSM Melapur, NL mit 5,0 kg Diethylphosphinsäure-Aluminiumsalz 5 min vermischt.

### Beispiel 6

Es werden 10 kg der phosphororganischen Flammschutzkomponente aus Beispiel 5 entsprechend den allgemeinen Vorschriften "Rollkompaktieren" bei einer Linienpresskraft von 20 kN/cm kompaktiert und nach der allgemeinen Vorschrift "Herstellung von Kornfraktionen" zu einer Kornfraktion von 400 bis 1000 µm verarbeitet.

### Beispiel 7

Es werden 10 kg Diethylphosphinsäure-Aluminiumsalz (mittlerer Teilchendurchmesser d₅₀ = 56 µm) entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1000 µm verarbeitet.

### Beispiel 8

In einem Taumelmischer werden 10 kg einer Mischung von 99 Gew.-% Diethylphosphinsäure-Aluminiumsalz und 1 Gew.-% ®Licowax E hergestellt und entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1000 µm verarbeitet.

### Beispiel 9

In einem Taumelmischer werden 10 kg einer Mischung von 90 Gew.-% Diethylphosphinsäure-Aluminiumsalz und 10 Gew.-% ®Licowax E hergestellt und entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1000 µm verarbeitet.

### Beispiel 10

In einem Taumelmischer werden 10 kg einer Mischung von 98 Gew.-% Diethylphosphinsäure-Aluminiumsalz und 2 Gew.-% ® PEG T500 hergestellt und entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1000 µm verarbeitet.

### Beispiel 11

Gemäß der allgemeinen Vorschrift wird eine Mischung von 57,5 Gew.-% Polyamid 6.6 (® Ultramid A3), 30 Gew.-% Glasfasern (®Vetrotex EC 10 4,5mm 98A), 12,5 Gew.-% der kompaktierten Flammschutzmittelzusammensetzung aus Beispiel 1 zu Prüfkörpern gegossen. Beim visuellen Abmustern ist die Prüfkörper-Oberfläche frei von Inhomogenitäten.

### Beispiel 12

Gemäß der allgemeinen Vorschrift wird eine Mischung von 57,5 Gew.-% Polyamid 6.6 (® Ultramid A3), 30 Gew.-% Glasfasern (®Vetrotex EC 10 4,5 mm 98A), 12,5 Gew.-% der kompaktierten Flammschutzmittelzusammensetzung aus Beispiel 3 zu Prüfkörpern gegossen. Beim visuellen Abmustern ist die Prüfkörper-Oberfläche frei von Inhomogenitäten.

### Beispiel 13 (Vergleich)

Gemäß der allgemeinen Vorschrift wird eine Mischung von 57,5 Gew.-% Polyamid 6.6 (® Ultramid A3), 30 Gew.-% Glasfasern (®Vetrotex EC 10 4,5 mm 98A), 12,5 Gew.-% der kompaktierten Flammschutzmittelzusammensetzung aus Beispiel 4 zu Prüfkörpern gegossen. Beim visuellen Abmustern sind an der Prüfkörper-Oberfläche deutliche Inhomogenitäten zu erkennen.

### Beispiel 14

Gemäß der allgemeinen Vorschrift wird eine Mischung von 57,5 Gew.-% Polyamid 6.6 (®Ultramid A3), 30 Gew.-% Glasfasern (®Vetrotex EC 10 4,5 mm 98 A), 12,5 Gew.-% der kompaktierten Flammschutzmittelzusammensetzung aus Beispiel 8 zu Prüfkörpern gegossen. Beim visuellen Abmustern ist die Prüfkörper-Oberfläche frei von Inhomogenitäten.

### Beispiel 15

Gemäß der allgemeinen Vorschrift wird eine Mischung von 57,5 Gew.-% Polyamid 6.6 (® Ultramid A3), 30 Gew.-% Glasfasern (®EC 10 4,5 mm 98 A), 12,5 Gew.-% der kompaktierten Flammschutzmittelzusammensetzung aus Beispiel 6 zu Prüfkörpern gegossen. Beim visuellen Abmustern ist die Prüfkörper-Oberfläche frei von Inhomogenitäten.

### Beispiel 16

Gemäß der allgemeinen Vorschrift wird eine Mischung von 50 Gew.-% Polybuthylenterephtalat-Granulat, 30 Gew.-% Glasfasern (® Vetrotex EC 10 4,5 mm 98A), 20 Gew.-% der kompaktierten Flammschutzmittelzusammensetzung aus Beispiel 3 zu Prüfkörpern gegossen. Beim visuellen Abmustern ist die Prüfkörper-Oberfläche frei von Inhomogenitäten.

### Beispiel 17

Von der phosphororganischen Flammschutzkomponente des Beispiels 1 wird die Staubneigung bestimmt.

**Tabelle 1:**

| Produktzusammensetzungen | | | | | | | | |
|---|---|---|---|---|---|---|---|---|
| Bsp. | *KFM-Zusammensetzung | | | Pressdruck | Unterkorn < 400 µm | Zielkorn | | Schüttdichte |
| | **POF % | Kompaktierhilfsmittel | % | kN | kg | 400-1000 µm kg | Ausbeute % | g/l |
| 1 | 100 | - | - | 4 | 4,6 | 0,4 | 8,2 | 389 |
| 2 | 100 | - | - | 10 | 3,0 | 2,0 | 39,7 | 443 |
| 3 | 100 | - | - | 30 | 2,4 | 2,6 | 52,9 | 668 |
| 4 | 100 | - | - | 38 | 1,7 | 3,3 | 66,0 | 817 |
| 6 | 100 | - | - | 20 | 1,5 | 3,5 | 70,0 | - |
| 7 | 100 | - | - | 10 | 2,9 | 2,1 | 42,0 | - |
| 8 | 99 | Licowax E | 1 | 10 | 2,0 | 3,0 | 60,0 | - |
| 9 | 90 | Licowax E | 10 | 10 | 1,4 | 3,6 | 71,0 | - |
| 10 | 98 | PEG T500 | 2 | 10 | 1,8 | 3,2 | 64,0 | - |

| | | | | | | | | |
|---|---|---|---|---|---|---|---|---|
| Für alle drei Tabellen gilt: *KFM: Kompaktierte Flammschutzmittelzusammensetzung | | | | | | | | |
| **POF: Phosphororganische Flammschutzkomponente | | | | | | | | |

**Tabelle 2:**

| Formkörper-Zusammensetzungen | | | | | |
|---|---|---|---|---|---|
| Bsp. | Formkörper-Zusammensetzung | | | | Bemerkungen |
| | KFM % | Glasfaser % | Polyamid 6.6 % | PBT % | - |
| 11 | 12,5 | 30 | 57,5 | 0 | KFM: aus Bsp. 1 |
| 12 | 12,5 | 30 | 57,5 | 0 | KFM: aus Bsp. 3 |
| 13 (Vgl.) | 12,5 | 30 | 57,5 | 0 | KFM: aus Bsp. 4 |
| 14 | 12,5 | 30 | 57,5 | 0 | KFM: aus Bsp. 8 |
| 15 | 12,5 | 30 | 57,5 | 0 | KFM: aus Bsp. 6 |
| 16 | 20 | 30 | 0 | 50 | KFM: aus Bsp. 3 |

**Tabelle 3:**

| Staubneigung | | | |
|---|---|---|---|
| Bsp. | Staubneigung % | Formkörper-Austestung Visuell | Bemerkungen |
| 11 | 6 | Homogen | - |
| 12 | 13 | Homogen | - |
| 13 (Vgl) | 9 | Inhomogen | - |
| 14 | 15 | Homogen | - |
| 15 | 12 | Homogen | - |
| 16 | - | Homogen | - |
| 17 (Vgl) | 66 | - | POF aus Bsp. 1 |

## Patentansprüche

1. Kompaktierte Flammschutzmittelzusammensetzung enthaltend eine phosphororganische Flammschutzkomponente, hergestellt durch Kompaktieren einer phosphororganischen Flammschutzkomponente mit oder ohne Kompaktierhilfsmittel.

2. Kompaktierte Flammschutzmittelzusammensetzung nach Anspruch 1, **dadurch gekennzeichnet, dass** es sich bei der phosphororganischen Flammschutzkomponente um ein Phosphinsäuresalz der Formel (I) und/oder ein Diphosphinsäuresalz der Formel (II) und/oder deren Polymere (Komponente A) handelt, 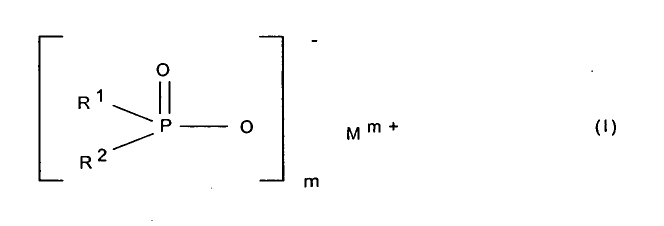 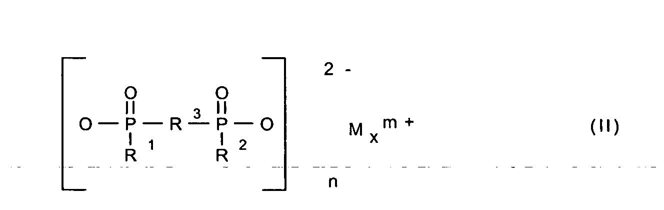 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder - Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4;
n 1 bis 4;
x 1 bis 4
bedeuten.

3. Kompaktierte Flammschutzmittelzusammensetzung nach Anspruch 1 oder 2, **dadurch gekennzeichnet, dass** M Calcium, Aluminium oder Zink bedeutet.

4. Kompaktierte Flammschutzmittelzusammensetzung nach einem oder mehreren der Ansprüche 1 bis 3, **dadurch gekennzeichnet, dass** R¹, R² gleich oder verschieden sind und C₁-C₆-Alkyl, linear oder verzweigt und/oder Phenyl bedeuten.

5. Kompaktierte Flammschutzmittelzusammensetzung nach einem oder mehreren der Ansprüche 1 bis 4, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

6. Kompaktierte Flammschutzmittelzusammensetzung nach einem oder mehreren der Ansprüche 1 bis 5 **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethylphenylen, tert.-Butylphenylen, Methyl-naphthylen, Ethyl-naphthylen oder tert.-Butylnaphthylen; Phenylmethylen, Phenylethylen, Phenylpropylen oder Phenylbutylen bedeutet.

7. Kompaktierte Flammschutzmittelzusammensetzung nach einem oder mehreren der Ansprüche 1 bis 6, **dadurch gekennzeichnet, dass** sie und/oder die phosphororganische Flammschutzkomponente weiterhin Melaminphosphat, Dimelaminphosphat, Melaminpyrophosphat, Melaminpolyphosphate, Melampolyphosphate, Melempolyphosphate und/oder Melonpolyphosphate enthält.

8. Kompaktierte Flammschutzmittelzusammensetzung nach einem oder mehreren der Ansprüche 1 bis 7, **dadurch gekennzeichnet, dass** sie und/oder die phosphororganische Flammschutzkomponente weiterhin Melaminkondensationsprodukte wie Melam, Melem und/oder Melon enthalten.

9. Kompaktierte Flammschutzmittelzusammensetzung nach einem oder mehreren der Ansprüche 1 bis 8, **dadurch gekennzeichnet, dass** sie und/oder die phosphororganische Flammschutzkomponente weiterhin oligomere Ester des Tris(hydroxyethyl)isocyanurats mit aromatischen Polycarbonsäuren, Benzoguanamin, Tris(hydroxyethyl)isocyanurat, Allantoin, Glycoluril, Melamin, Melamincyanurat, Dicyandiamid und/oder Guanidin enthalten.

10. Kompaktierte Flammschutzmittelzusammensetzung nach einem oder mehreren der Ansprüche 1 bis 9, **dadurch gekennzeichnet, dass** sie und/oder die phosphororganische Flammschutzkomponente stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, enthält.

11. Kompaktierte Flammschutzmittelzusammensetzung nach einem oder mehreren der Ansprüche 1 bis 9, **dadurch gekennzeichnet, dass** sie und/oder die phosphororganische Flammschutzkomponente als Komponente B eine synthetische anorganische Verbindung und/oder ein mineralisches Produkt enthält.

12. Kompaktierte Flammschutzmittelzusammensetzung nach einem oder mehreren der Ansprüche 1 bis 11, **dadurch gekennzeichnet, dass** es sich bei der Komponente B um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen handelt.

13. Kompaktierte Flammschutzmittelzusammensetzung nach einem oder mehreren der Ansprüche 1 bis 12, **dadurch gekennzeichnet, dass** sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, - phosphat, -borat oder -sulfide; bei den Aluminiumverbindungen um Aluminiumhydroxid oder -phosphat handelt.

14. Kompaktierte Flammschutzmittelzusammensetzung nach einem oder mehreren der Ansprüche 1 bis 13, **dadurch gekennzeichnet, dass** sie und/oder die phosphororganische Flammschutzkomponente als weitere Komponente C Stickstoffverbindungen enthält.

15. Kompaktierte Flammschutzmittelzusammensetzung nach einem oder mehreren der Ansprüche 1 bis 14, **dadurch gekennzeichnet, dass** es sich bei den Stickstoffverbindungen um solche der Formeln (lll) bis (Vlll) oder Gemische davon 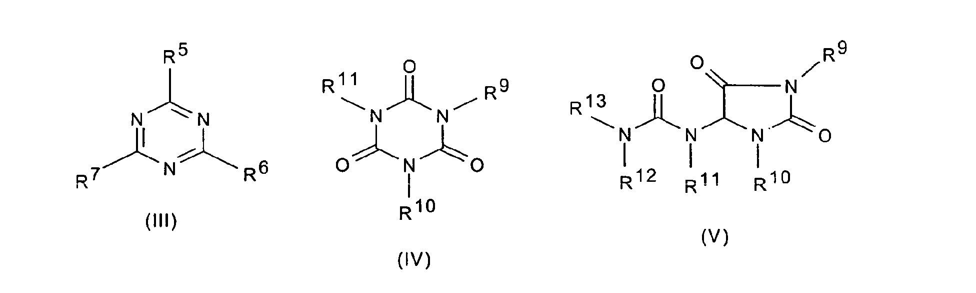 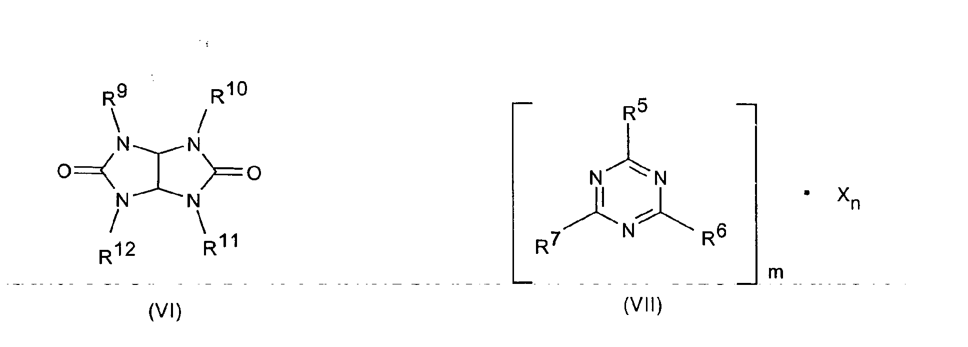 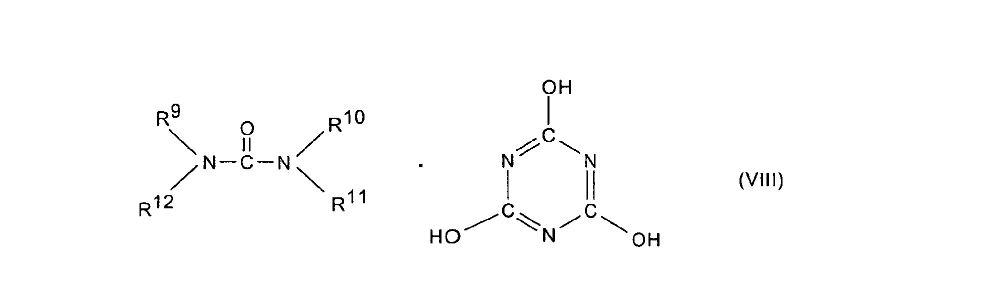 worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und - N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können,
bedeuten.

16. Kompaktierte Flammschutzmittelzusammensetzung nach einem oder mehreren der Ansprüche 1 bis 15, **dadurch gekennzeichnet, dass** sie und/oder die phosphororganische Flammschutzkomponente weiterhin Carbodiimide enthalten.

17. Kompaktierte Flammschutzmittelzusammensetzung nach einem oder mehreren der Ansprüche 1 bis 16, **dadurch gekennzeichnet, dass** sie eine mittlere Teilchengröße von 100 bis 2.000 µm, bevorzugt 200 bis 1000 µm aufweisen.

18. Kompaktierte Flammschutzmittelzusammensetzung nach einem oder mehreren der Ansprüche 1 bis 17, **dadurch gekennzeichnet, dass** sie eine mittlere Schüttdichte von 200 bis 1500 g/l, bevorzugt 300 bis 1.000 g/l, aufweisen.

19. Kompaktierte Flammschutzmittelzusammensetzung nach einem oder mehreren der Ansprüche 1 bis 18, **dadurch gekennzeichnet, dass** das Mengen-Verhältnis von Kompaktierhilfsmittel zu phosphororganischer Flammschutzkomponente 1 zu 199 bis 1 zu 0,11, bevorzugt 1 bis 99 bis 1 zu 0,25 und besonders bevorzugt 1 zu 49 bis 1 zu 1 beträgt.

20. Verfahren zur Herstellung von kompaktierten Flammschutzmittelzusammensetzungen nach einem oder mehreren der Ansprüche 1 bis 19, **dadurch gekennzeichnet, dass** man die phosphororganischen Flammschutzkomponente mit oder ohne Kompaktierhilfsmittel unter einem Druck von 1 kN/cm² bis 60 kN/cm² verdichtet.

21. Verfahren zur Herstellung von kompaktierten Flammschutzmittelzusammensetzungen nach Anspruch 20, **dadurch gekennzeichnet, dass** es sich dabei um eine Rollkompaktierung handelt.

22. Verfahren nach Anspruch 21, **dadurch gekennzeichnet, dass** bei der Rollkompaktierung ein Linienpresskraft von 1 kN/cm bis 30 kN/cm eingesetzt wird.

23. Verfahren nach Anspruch 21 oder 22, **dadurch gekennzeichnet, dass** bei der Rollkompaktierung ein Linienpresskraft von 2 kN/cm bis 20 kN/cm eingesetzt wird.

24. Verfahren nach einem oder mehreren der Ansprüche 20 bis 23, **dadurch gekennzeichnet, dass** es sich bei dem Kompaktierhilfsmittel um Alkylalkoxylate mit 8 bis 22 C-Atomen und 1 bis 80 EO-Einheiten pro Mol Alkohol handelt.

25. Verfahren nach einem oder mehreren der Ansprüche 20 bis 23, **dadurch gekennzeichnet, dass** es sich bei dem Kompaktierhilfsmittel um Caprolactam und/oder Triphenylphosphat handelt.

26. Verfahren nach einem oder mehreren der Ansprüche 20 bis 23, **dadurch gekennzeichnet, dass** es sich bei dem Kompaktierhilfsmittel um Ethylenglykol, Propylenglykol und/oder Butylenglykol, deren Oligomere und/oder Polymere und/oder deren Ether handelt.

27. Verfahren nach einem oder mehreren der Ansprüche 20 bis 23, **dadurch gekennzeichnet, dass** es sich bei dem Kompaktierhilfsmittel um natürliche, chemisch modifizierte und/oder synthetische Wachse; bevorzugt um Carnaubawachse und Montanwachse, handelt.

28. Verfahren nach einem oder mehreren der Ansprüche 20 bis 23, **dadurch gekennzeichnet, dass** es sich bei dem Kompaktierhilfsmittel um Kunstharze, bevorzugt Phenolharze, handelt.

29. Flammgeschützte Polymerformmasse, **dadurch gekennzeichnet, dass** sie eine kompaktierte Flammschutzmittelzusammensetzung nach mindestens einem der Ansprüche 1 bis 19 enthält.

30. Flammgeschützte Polymerformmasse nach Anspruch 29, **dadurch gekennzeichnet, dass** sie
1 bis 50 Gew.-% kompaktierte Flammschutzmittelzusammensetzung,
1 bis 99 Gew.-% thermoplastisches Polymer oder Mischungen derselben
0 bis 60 Gew.-% Additive
0 bis 60 Gew.-% Füllstoff enthält.

31. Flammgeschützte Polymerformmasse nach Anspruch 29 oder 30, **dadurch gekennzeichnet, dass** sie
5 bis 30 Gew.-% Kompaktierte Flammschutzmittelzusammensetzung,
5 bis 90 Gew.-% thermoplastisches Polymer oder Mischungen derselben
5 bis 40 Gew.-% Additive
5 bis 40 Gew.-% Füllstoff enthält.

32. Flammgeschützte Polymerformmasse nach einem oder mehreren der Ansprüche 29 bis 31, **dadurch gekennzeichnet, dass** sie weiterhin Komponenten B und/oder C enthalten.

33. Flammgeschützte Polymerformmasse nach einem oder mehreren der Ansprüche 29 bis 32, **dadurch gekennzeichnet, dass** es sich bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/Acrylnitril-Butadien-Styrol) handelt.

34. Flammgeschützte Polymerformmasse nach einem oder mehreren der Ansprüche 29 bis 33, **dadurch gekennzeichnet, dass** es sich bei den thermoplastischen Polymeren um Polyamid, Polyester oder ABS handelt.

35. Polymer-Formkörper, -Filme, -Fäden und -Fasern enthaltend eine kompaktierte Flammschutzmittelzusammensetzung nach mindestens einem der Ansprüche 1 bis 19.

36. Polymer-Formkörper, -Filme, -Fäden und -Fasern nach Anspruch 35, **dadurch gekennzeichnet, dass** es sich bei dem Polymer um ein thermoplastisches oder duroplastisches Polymer handelt.

37. Polymer-Formkörper, -Filme, -Fäden und -Fasern nach Anspruch 35 oder 36, **dadurch gekennzeichnet, dass** es sich bei dem bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS handelt.

38. Polymer-Formkörper, -Filme, -Fäden und -Fasern nach Anspruch 35 oder 36, **dadurch gekennzeichnet, dass** es sich bei den duroplastischen Polymeren um Formaldehyd-, Epoxid-, Melamin- Phenolharz-Polymere und/oder Polyurethane handelt.

39. Polymer-Formkörper, -Filme, -Fäden und -Fasern nach einem oder mehreren der Ansprüche 35 bis 37, **dadurch gekennzeichnet, dass** sie
1 bis 50 Gew.-% kompaktierte Flammschutzmittelzusammensetzung,
1 bis 99 Gew.-% Polymer oder Mischungen derselben
0 bis 60 Gew.-% Additive
0 bis 60 Gew.-% Füllstoff enthalten.

40. Polymer-Formkörper, -Filme, -Fäden und -Fasern nach einem oder mehreren der Ansprüche 35 bis 39, **dadurch gekennzeichnet, dass** sie
5 bis 30 Gew.- % kompaktierte Flammschutzmittelzusammensetzung,
5 bis 90 Gew.-% Polymer oder Mischungen derselben
5 bis 40 Gew.-% Additive
5 bis 40 Gew.-% Füllstoff enthalten.
